# EUROPEAN PATENT APPLICATION

(11) **EP 3 723 031 A1**
(43) Date of publication of application: **14.10.2020**
(21) Application number: 19743210.7
(22) Date of filing: 22.01.2019
(51) Int. Cl.: G06Q 50/26

(54) **INFORMATION PROCESSING DEVICE, INFORMATION PROCESSING METHOD, PROGRAM, AND DATA STRUCTURE**

(30) Priority: 24.01.2018 JP 2018009837
(71) Applicant: Asukoe Partners Inc., Tokyo 105-0001 (JP)
(72) Inventor: YASUI, Hideyuki, Tokyo 105-0001 (JP); TAKAOKA, Hideo, Tokyo 105-0001 (JP); KITANO, Naho, Tokyo 105-0001 (JP); KONDO, Makoto, Tokyo 105-0001 (JP); KOROSUE, Kazuyoshi, Tokyo 105-0001 (JP)
(74) Representative: Stöckeler, Ferdinand
(86) International application number: PCT/JP2019/001785
(87) International publication number: WO 2019/146572

(57) **Abstract**

An information processing device has: a definition unit for storing definition information about a predetermined service; an input unit that inputs information regarding a target person who intends to use the predetermined service as an argument of the definition information regarding the predetermined service held in the definition unit; a determination unit for determining whether or not to apply the predetermined service on the basis of the information that is about the subject and input from the input unit, and the definition information that is about the predetermined service and stored in the definition unit; an information generation unit for generating determination result information that is calculated on the basis of the determination result determined by the determination unit about whether to apply the service; and an output unit for outputting the determination result information generated by the information generation unit.

## Description

### {Technical Field}

The present invention relates to an information processing device, an information processing method, a program, and a data structure.

### {Background Art}

An information providing system for comparing administrative services provided by local governments with each other has been known (for example, PTL 1).

### {Citation List}

### {Patent Literature}

{PTL 1} JP 2007-47888 A

### {Summary of Invention}

### {Technical Problem}

By the way, names of the administrative services provided by the local governments may be changed from year to year or may be changed to local independent system names in a process of consigning office works from a national government to prefectures or the local governments, and even in a case of comparing the administrative services provided by the local governments with each other, there is a problem that it is difficult to accurately grasp which administrative services are to be comparison targets and provide objectively and accurately compared information to a user.

In addition, in a case where the person in charge of the local government who provides the administrative service of the local government uses a conventional information providing system as shown in PTL 1, even though the person in charge tries to compare an administrative service provided by another local government with the administrative service provided by his/her local government, there is a problem that it is difficult to grasp in detail on the basis of what kind of establishment-ground-law the administrative service is provided.

Further, in a system that configures a system providing the administrative service, information regarding the administrative service other than a name may also be changed from year to year, there may be independent items by the local governments, or new items may increase in the future. Therefore, there is a problem that correction, re-design, or the like of a table itself for managing such information inevitably causes increases in man-hours and a cost.

In other words, although it has been required to express the administrative services themselves objectively and consistently from various viewpoints, there are no objective data expression method that is based on a mechanism that can realize such expressions and characteristics of administrative services, appropriate data processing method, and data management method capable of appropriately suppressing a cost.

In addition, such a problem is a similar problem for service users, service providers, and persons who configure a system providing information regarding services in private services and the like as well as the administrative services, and with respect to such information, an objective and consistent data expression method, an appropriate data processing method, and a data management method capable of appropriately suppressing a cost have been demanded.

In addition, adjacent municipalities and adjacent prefectures have organized a plurality of independent administrative services, respectively, but in many cases, while integrated administration of a large region is insisted, a person in charge of managing the administrative services on a side providing the administrative services have grasped only the administrative services that he has jurisdiction over. The cause of this is that there is no system that simply compares and analyzes the administrative services of the adjacent municipalities and the like with each other. Further, even in view of a user (target person) who uses the administrative service, the user can refer (browse) services to be used in a region (a prefecture or a municipality) to which the user himself/herself belongs but cannot perform comparative analysis with administrative services of other regions. Therefore, in a case where an administrative service provider side performs improvement or optimization of the administrative service, it is difficult to quickly and accurately improve or optimize the administrative service. Then, it is difficult for the user himself/herself to quickly and accurately select the administrative service.

Therefore, an object of the present invention is to provide an information processing device, an information processing method, a program, and a data structure capable of solving the problem described above, that is, capable of expressing information regarding a predetermined service by objective and consistent data so as to appropriately process and manage the information regarding the predetermined service, capable of causing an administrative service provider side to quickly and accurately improve or optimize the administrative service, and capable of causing a user himself/herself to quickly and appropriately select the administrative service.

### {Solution to Problem}

In order to solve the problem described above, an information processing device of the present invention includes: a definition unit that holds definition information regarding a predetermined service; an input unit that inputs information regarding a target person who intends to use the predetermined service to the definition unit as an argument; a determination unit that determines whether or not the predetermined service is applicable on the basis of the information regarding the target person input from the input unit and the definition information regarding the predetermined service held in the definition unit; an information generation unit that generates determination result information calculated on the basis of whether or not the predetermined service is applicable and a determination result of the determination unit; and an output unit that outputs the determination result information generated by the information generation unit.

In addition, another aspect of an information processing device of the present invention includes: a definition unit that holds definition information regarding a predetermined service; an input unit that inputs information regarding the predetermined service as an argument of definition information regarding the predetermined service held in the definition unit; a calculation unit that performs calculation regarding whether or not the predetermined service is applicable calculates a desired value according to a calculation equation related to the predetermined service on the basis of the information regarding the predetermined service input through the input unit and the definition information regarding the predetermined service held in the definition unit; and an output unit that outputs a calculation result of the calculation unit.

In addition, another aspect of an information processing device of the present invention includes: a definition unit that holds definition information regarding a predetermined service; an input unit that inputs information regarding the predetermined service that is to provide or use the predetermined service as an argument of the definition information regarding the predetermined service held in the definition unit; a determination unit that determines whether or not a service obtained by inputting information of a target person generated randomly and having a predetermined attribute to each of the information regarding the predetermined service input through the input unit and the definition information regarding the predetermined service defined in the definition unit is applicable; an information generation unit that generates information indicating whether or not the service is applicable, as a determination result by the determination unit, and service content information; an extraction unit that determines whether or not a plurality of the generated information indicating whether or not the service is applicable is similar and extracts only a similar service; and an output unit that outputs the extracted similar service.

In addition, another aspect of an information processing device of the present invention includes: a definition unit that holds definition information regarding a predetermined service; an input unit that inputs information regarding the predetermined service that is to provide or use the predetermined service as an argument of the definition information regarding the predetermined service held in the definition unit; a determination unit that determines whether or not a service obtained by inputting information of a target person generated randomly and having a predetermined attribute to each of the information regarding the predetermined service input through the input unit and the definition information regarding the predetermined service defined in the definition unit is applicable; an information generation unit that generates information indicating whether or not the service is applicable, as a determination result by the determination unit, and service content information; and an extraction unit that determines whether or not a plurality of the generated information indicating whether or not the service is applicable is similar and extracts only a similar service, wherein, the determination unit comparatively analyses a plurality of similar services extracted by the extraction unit and determines superiority/inferiority of value evaluation of the services, and information on the superiority/inferiority of the value evaluation of the service determined by the determination unit is output to an output unit.

In addition, in another aspect of the information processing device of the present invention, it is preferable that the definition information regarding the predetermined service is definition information regarding an administrative service.

In addition, in another aspect of the information processing device of the present invention, it is preferable that the definition information regarding the administrative service includes basic information including at least one of an administrative service name, a ground law and regulation, and an implementation organization, in addition to the configuration described above.

In addition, in another aspect of the information processing device of the present invention, it is preferable that the definition information regarding the administrative service includes action information generated by the administrative service, in addition to the configuration described above.

In addition, in another aspect of the information processing device of the present invention, it is preferable that the definition information regarding the administrative service includes person information or thing information that is a subject of the administrative service, in addition to the configuration described above.

In addition, in another aspect of the information processing device of the present invention, it is preferable that the definition information regarding the administrative service includes period information regarding the administrative service, in addition to the configuration described above.

In addition, in another aspect of the information processing device of the present invention, it is preferable that the definition information regarding the administrative service includes information regarding notification, application, or feedback, the information is for an action of the administrative service to occur, in addition to the configuration described above.

In addition, in another aspect of the information processing device of the present invention, it is preferable that the definition information regarding the administrative service is defined in local government units or in administrative service units, in addition to the configuration described above.

In addition, another aspect of the present invention relates to an information processing method. That is, an information processing method of the present invention is an information processing method executed by an information processing device including a definition unit, an input unit, a determination unit, an information generation unit, and an output unit, the definition unit holding definition information regarding a predetermined service, the information processing method including: an input step in which the input unit inputs information regarding a target person who intends to use the predetermined service to the definition unit as an argument; a determination step in which the determination unit determines whether or not the predetermined service is applicable on the basis of the information regarding the target person input from the input step and the definition information regarding the predetermined service held in the definition unit; an information generation step in which the information generation unit generates determination result information calculated on the basis of whether or not the predetermined service is applicable and a determination result in the determination step; and an output step in which the output unit outputs the determination result information generated by the information generation step.

In addition, another aspect of an information processing method of the present invention is: an information processing method executed by an information processing device including a definition unit, an input unit, a calculation unit, and an output unit, the definition unit holding definition information regarding a predetermined service, the information processing method including: an input step in which the input unit inputs information regarding the predetermined service as an argument of the definition information regarding the predetermined service held in the definition unit; a calculation step in which the calculation unit calculates regarding whether or not the predetermined service is applicable or calculates a desired value according to a calculation equation related to the predetermined service on the basis of the information regarding the predetermined service input through the input unit and the definition information regarding the predetermined service held in the definition unit; and an output step in which the output unit outputs a calculation result of the calculation unit.

In addition, another aspect of an information processing method of the present invention is: an information processing method executed by an information processing device including a definition unit, an input unit, a determination unit, an information generation unit, an extraction unit, and an output unit, the definition unit holding definition information regarding a predetermined service, the information processing method including: an input step in which the input unit inputs information regarding the predetermined service that is to provide or use the predetermined service as an argument of the definition information regarding the predetermined service held in the definition unit; a determination step in which the determination unit determines whether or not a service obtained by inputting information of a target person generated randomly and having a predetermined attribute to each of the information regarding the predetermined service and the definition information regarding the predetermined service held in the definition unit is applicable; an information generation step in which the information generation unit generates information indicating whether or not the service is applicable, as a determination result by the determination unit, and service content information; an extraction step in which the extraction unit determines whether or not a plurality of the generated information indicating whether or not the service is applicable is similar and extracts only a similar service; and an output step of outputting the similar service extracted by the extraction step.

In addition, another aspect of an information processing method of the present invention is: an information processing method executed by an information processing device including a definition unit, an input unit, a determination unit, an information generation unit, an extraction unit, and an output unit, the definition unit holding definition information regarding a predetermined service, the information processing method including: an input step in which the input unit inputs information regarding the predetermined service that is to provide or use the predetermined service as an argument of the definition information regarding the predetermined service held in the definition unit; a first determination step in which the determination unit determines whether or not a service obtained by inputting information of a target person generated randomly and having a predetermined attribute to each of the information regarding the predetermined service and the definition information regarding the predetermined service held in the definition unit is applicable; an information generation step in which the information generation unit generates information indicating whether or not the service is applicable, as a determination result by the determination unit, and service content information; an extraction step in which the extraction unit determines whether or not a plurality of the generated information indicating whether or not the service is applicable is similar and extracts only a similar service; a second determination step in which the determination unit comparatively analyses a plurality of similar services extracted by the extraction unit and determines superiority/inferiority of value evaluation of the service; and an output step in which the output unit outputs information on the superiority/inferiority of the value evaluation of the service determined by the determination unit.

In addition, another aspect of the present invention relates to a program. That is, a program of the present invention is a program for causing a computer to function as an information processing device including a definition unit, an input unit, an information generation unit, and an output unit, the program causing the computer to function as: the definition unit that holds definition information regarding a predetermined service; the input unit that inputs information regarding a target person who intends to use the predetermined service to the definition unit as an argument; the determination unit that determines whether or not the predetermined service is applicable on the basis of the information regarding the target person input from the input unit and the definition information regarding the predetermined service held in the definition unit; the information generation unit that generates determination result information calculated on the basis of whether or not the predetermined service is applicable and a determination result of the determination unit; and the output unit that outputs the determination result information generated by the information generation unit.

In addition, another aspect of a program of the present invention is a program for causing a computer to function as an information processing device including a definition unit, an input unit, a calculation unit, and an output unit, the program causing the computer to function as: the input unit that inputs information regarding the predetermined service as an argument of definition information regarding the predetermined service held in the definition unit; the calculation unit that performs calculation regarding whether or not the predetermined service is applicable or calculates a desired value according to a calculation equation related to the predetermined service on the basis of the information regarding the predetermined service input through the input unit and the definition information regarding the predetermined service held in the definition unit; and the output unit that outputs a calculation result of the calculation unit.

In addition, another aspect of a program of the present invention is a program for causing a computer to function as an information processing device including a definition unit, an input unit, a determination unit, an information generation unit, an extraction unit, and an output unit, the program causing the computer to function as: the input unit that inputs information regarding a predetermined service that is to provide or use the predetermined service as an argument of definition information regarding the predetermined service held in the definition unit; the determination unit that determines whether or not a service obtained by inputting information of a target person generated randomly and having a predetermined attribute to each of the information regarding the predetermined service input through the input unit and the definition information regarding the predetermined service defined in the definition unit is applicable; the information generation unit that generates information indicating whether or not the service is applicable, as a determination result by the determination unit, and service content information; the extraction unit that extracts only a similar service by determining whether or not a plurality of the generated information indicating whether or not the service is applicable and a plurality of the generated service content information is similar to each other; and the output unit that outputs the extracted similar service.

In addition, another aspect of a program of the present invention is a program for causing a computer to function as an information processing device including a definition unit, an input unit, a determination unit, an information generation unit, an extraction unit, and an output unit, the program causing the computer to function as: the input unit that inputs information regarding the predetermined service that is to provide or use the predetermined service as an argument of definition information regarding the predetermined service held in the definition unit; the determination unit that determines whether or not a service obtained by inputting information of a target person generated randomly and having a predetermined attribute to each of the information regarding the predetermined service input through the input unit and the definition information regarding the predetermined service held in the definition unit is applicable; the information generation unit that generates information indicating whether or not the service is applicable, as a determination result by the determination unit, and service content information; and the extraction unit that determines whether or not a plurality of the generated information indicating whether or not the service is applicable is similar and extracts only a similar service, causing the determination unit to perform a function of comparative analysis of a plurality of similar services extracted by the extraction unit and determining superiority/inferiority of value evaluation of the service, and causing the output unit to perform a function of outputting information on the superiority/inferiority of the value evaluation of the service determined by the determination unit.

In addition, another aspect of the present invention relates to a data structure. That is, a data structure of the present invention is a data structure used in a system for providing an administrative service, the data structure being for defining information regarding the administrative service, and being for storing: basic information including at least one of the administrative service name, a ground law and regulation, and an implementation organization, action information generated by the administrative service, person information or thing information that is a subject of the administrative service, period information regarding the administrative service, and information regarding notification, application, or feedback for an action of the administrative service to occur, wherein, whether or not the information regarding the administrative service is applicable is determined on the basis of the information regarding the administrative service defined by the information stored in the data structure and information regarding a target person who intends to use the administrative service, determination result information calculated on the basis of whether or not the information regarding the administrative service is applicable and a determination result is generated, and the generated determination result information is output.

In addition, another aspect of a data structure of the present invention is a data structure used in a system for providing an administrative service, the data structure being for defining information regarding the administrative service, and being for storing: basic information including at least one of an administrative service name, a ground law and regulation, and an implementation organization, action information generated by the administrative service, person information or thing information that is a subject of the administrative service, period information regarding the administrative service, and information regarding notification, application, or feedback for an action of the administrative service to occur, wherein, when the information regarding the administrative service is input as an argument of definition information regarding the administrative service stored in the data structure, whether or not the administrative service is applicable is calculated or a desired value is calculated on the basis of a calculation equation related to the administrative service, and a calculation result is output.

### {Advantageous Effects of Invention}

According to the present invention, it is possible to express information regarding a predetermined service by objective and consistent data to appropriately process and manage the information regarding the predetermined service, and in a case where an administrative service provider side performs improvement or optimization of the administrative service, it is difficult to quickly and appropriately improve the administrative service. And the present invention allows to provide the information processing device, the information processing method, the program, and the data structure in which the user himself/herself can select the administrative service quickly and appropriately.

### {Brief Description of Drawings}

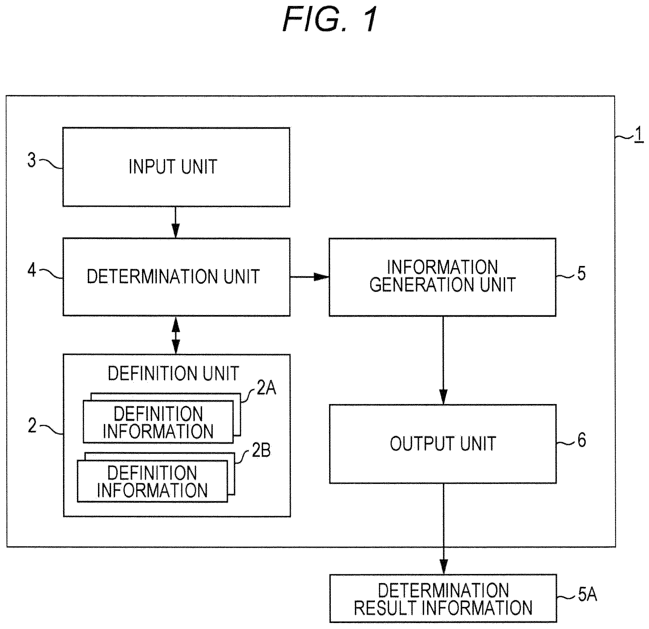

!
{Fig. 1}
   Fig. 1 is a diagram illustrating an outline of an information processing! device 1 according to an embodiment of the present invention.
{Fig. 2}
   Fig. 2 is a diagram illustrating a hardware configuration example of the information processing device 1 according to the embodiment of the present invention.
{Fig. 3}
   Fig. 3 is a diagram illustrating an example of definition information 2A and 2B expressing an administrative service of a local government included in the information processing device 1 according to the embodiment of the present invention.
{Fig. 4}
   Fig. 4 is a diagram illustrating an example of definition information expressing a target person input to the information processing device 1 according to the embodiment of the present invention.
{Fig. 5}
   Fig. 5 is an example of a flowchart illustrating processing executed by the information processing device 1 according to the embodiment of the present invention.
{Fig. 6}
   Fig. 6 is a diagram illustrating an outline of an information processing device 1A according to another embodiment of the present invention.
{Fig. 7}
   Fig. 7 is an example of a flowchart illustrating processing executed by the information processing device 1A according to another embodiment of the present invention.
{Fig. 8}
   Fig. 8 is a diagram for describing a merit of the information processing devices 1 and 1A in a case of analyzing information regarding an administrative service.
{Fig. 9}
   Fig. 9 is a diagram illustrating an image of a case where both of information regarding a target person and information regarding an administrative service are input as arguments to a function having the definition information 2A and 2B and the image of outputs based on such inputs.
{Fig. 10}
   Fig. 10 is an example of a Web page realized by the information processing devices 1 and 1A according to another embodiment of the present invention.
{Fig. 11}
   Fig. 11 is a diagram illustrating an outline of an information processing device 1B according to still another embodiment of the present invention.
{Fig. 12}
   Fig. 12 is a diagram illustrating a hardware configuration example of the information processing device 1B according to still another embodiment of the present invention.
{Fig. 13}
   Fig. 13 is an example of a flowchart illustrating processing executed by the information processing device 1B according to still another embodiment of the present invention.
{Fig. 14}
   Fig. 14 is a diagram illustrating an outline of an information processing device 1C according to a modification of the present invention.
{Fig. 15}
   Fig. 15 is a diagram illustrating a hardware configuration example of the information processing device 1C according to a modification of the present invention.
{Fig. 16}
   Fig. 16 is an example of a flowchart illustrating processing executed by;the information processing device 1C according to a modification of the present invention.

### {Description of Embodiments}

Hereinafter, an information processing device, an information processing method, a program, and a data structure according to an embodiment of the present invention will be described with reference to Figs. 1 to 9. With respect to the information processing method and the program of the present invention, an operation of the information processing device and a program installed in the information processing device will be described by way of example. In addition, the data structure of the present invention will be described on the basis of data stored in the information processing device. It should be noted that in the following embodiments, an information processing device, an information processing method, a program, and a data structure relating to an administrative service will be described, but an information processing device, an information processing method, a program, and a data structure of the present invention are not limited to the administrative service and are not limited to the following embodiments.

It should be noted that an "administrative service" described in the following embodiments may include procedures and systems other than "notification" and "application", in addition to administrative services (the "notification" as defined in Article 2, Paragraph 7 of the Administrative Procedure Act and the "application" defined in Article 2 Paragraph 3 of the Administrative Procedure Act) organized by administrative organs.

### (First embodiment: Outline of information processing device 1)

Fig. 1 is a diagram illustrating an outline of an information processing device 1 according to an embodiment of the present invention. In the information processing device 1, by comparing input attribute information of a target person with information regarding a specific administrative service, for example, it is possible to determine whether or not the target person is a target to which the specific administrative service is to be applied. It should be noted that the "information regarding the administrative service" is, for example, basic information such as an administrative service name, a ground law and regulation, an implementation organization, and the like, action information indicating an event occurring by using (applying) the administrative service, target person information indicating a person (or a thing) that is a subject of the event, period information indicating a period in which the event occurs, and procedure information such as notification, application, feedback, or the like, for generating the event. Hereinafter, each unit of the information processing device 1 will be described in detail.

The information processing device 1 is an example of an information processing device in the claims. As illustrated in Fig. 1, the information processing device 1 includes a definition unit 2, an input unit 3, a determination unit 4, an information generation unit 5, and an output unit 6.

The definition unit 2 has definition information 2A and 2B, which can be compared with an information group input from an input unit 3 described later to discriminate whether or not to apply an administrative service or be used for generation or the like of new information. In the definition information 2A and 2B, for example, information regarding an administrative service or/and information regarding a target person are defined. It should be noted that a specific example of the definition information 2A and 2B in which the information regarding the administrative service or/and the information regarding the target person are defined as a function will be described later.

The input unit 3 inputs information regarding a target person who intends to use the administrative service to the definition unit 2 as an argument. Here, the "information regarding the target person" is, for example, so-called attribute information of the target person, such as a full name of the target person himself/herself, a first name of a target person's father, a first name of a target person's mother, the date of birth of the target person, a gender of the target person, a first name of a target person's spouse, a first name of a target person's child, a household composition of the target person, whether or not the target person is pregnant, whether the target person is alive or dead, and the like. However, the "information regarding the target person" in the present invention may include information other than the attribute information of the target person described above. Further, the input unit 3 may input information regarding the administrative service, instead of the information regarding the target person, to the definition unit 2.

The determination unit 4 determines whether or not the specific administrative service is applicable on the basis of the information regarding the target person input from the input unit 3 and the definition information 2A and 2B of the specific administrative service held in the definition unit 2. It should be noted that the determination unit 4 transmits an application result of the specific administrative service to the information generation unit 5, but in a case where an action occurs when the specific administrative service is applied, the information generation unit 5 is informed to generate information indicating the action result.

The information generation unit 5 generates determination result information 5A based on a determination result of the determination unit 4. It should be noted that the information generation unit 5 is an example of an information generation unit or a calculation unit in the claims, and in a case where the determination result information 5A needs to be displayed as a numerical value such as an amount of money or the like in judgement whether or not the administrative service is applicable, calculation processing for calculating the amount of money for performing such display, or the like, can also be executed.

The output unit 6 outputs the determination result information based on the determination result for whether or not the administrative service is applicable, the determination result being generated by the information generation unit 5. An output destination of the output unit 6 is, for example, a display of the information processing device 1, a display included in an external terminal that communicates with the information processing device 1 through a network, or the like. It should be noted that in a case where the information output from the output unit 6 is further processed or is used for another processing, the information may be supplied to a destinated processor or a destination for handling.

### (Hardware configuration example of information processing device 1)

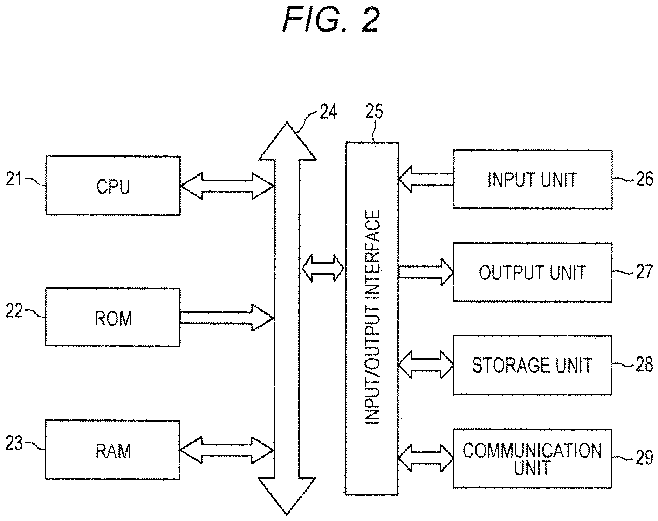

Fig. 2 is a diagram illustrating a hardware configuration example of the information processing device 1 according to the embodiment of the present invention. The information processing device 1 is a so-called computer, and is a computer including, hardware resources such as, for example, a central processing unit (CPU) 21, a read only memory (ROM) 22, a random access memory (RAM) 23, a bus 24, an input/output interface 25, an input unit 36, a display unit 27, a storage unit 28, and a communication unit 29 as a hardware configuration. Therefore, information processing executed by each unit of the information processing device 1 described above is realized.

The CPU 21 controls each unit by developing and executing various programs stored in the ROM 22 or the storage unit 28 into the RAM 23 on the basis of operation signals and data transmitted from each unit of the information processing device through the bus 24 and the input/output interface 25. Therefore, information processing executed by the information processing device 1 described later is realized.

The input unit 36 is, for example, a keyboard, a mouse, or the like. The display unit 27 is a display including, for example, a liquid crystal display element, an organic electro luminescence (EL) display element, or the like, and displays various information by processing of the CPU 21. It should be noted that the input unit 36 and the display unit 27 may be composed of a touch panel that has functions of the input unit 36 and the display unit 27. The storage unit 28 stores at least an operating system (OS) and various programs. The storage unit 28 is composed of, for example, a hard disk drive (HDD), a solid state drive (SSD), a flash memory, or the like. The HDD, the SSD, the flash memory, or the like are embedded in the device, but may be external devices connected to the device by a predetermined interface. Specifically, the HDD, the SSD, the flash memory, or the like is an external HDD or universal serial bus (USB) memory connected by a USB, a memory card connected by a predetermined memory card slot, or the like. The communication unit 29 is a communication interface for connecting to a local area network (LAN) or the like.

### (Example of definition information 2A and 2B of administrative service)

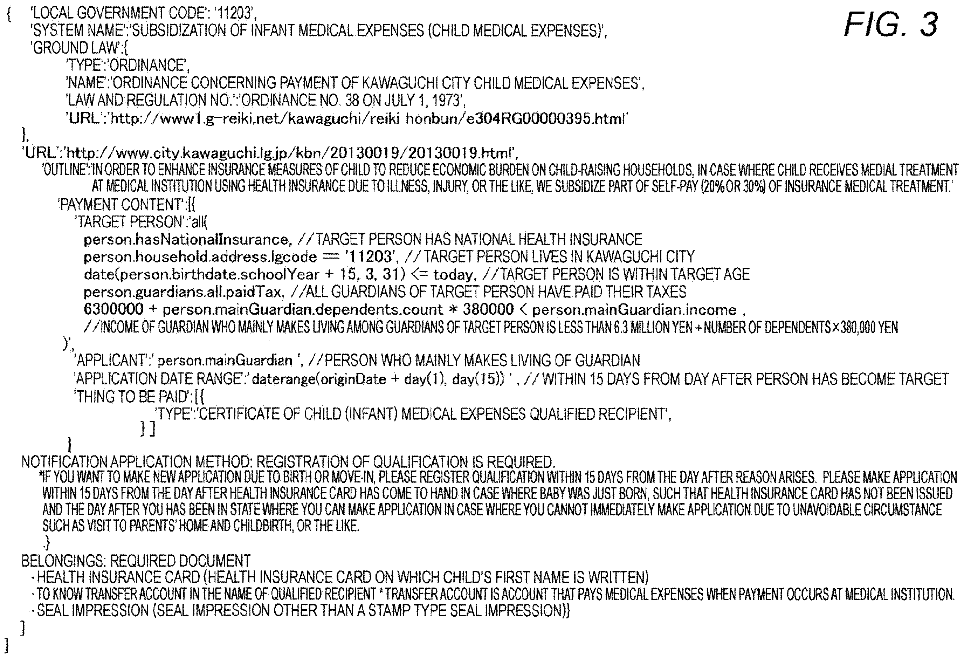

Fig. 3 is a diagram illustrating an example of definition information 2A and 2B expressing an administrative service of a local government included in the information processing device 1 according to the embodiment of the present invention. The example illustrated in Fig. 3 defines "subsidization of infant medical expenses (child medical expenses)" as an administrative service of Kawaguchi City, Saitama Prefecture. In this definition information, a "local government code", a "ground law", a "type", a "name", a "law and regulation No.", a "URL", an "outline", a "payment content", a "notification application method", and "belongings" are defined. The "local government code" is information for uniquely identifying a local government. In the example illustrated in Fig. 3, it is indicated that a local government code of Kawaguchi City is "11203". The "ground law" is an area that stores information regarding a law serving as a ground for providing this administrative service. The "type" is an area that defines information regarding a type of law and regulation that is the ground law, and is defined as an "ordinance" here. The "name" is an area that defines a formal name of the ground law, and is defined as an "ordinance concerning payment of Kawaguchi City child medical expenses". The "law and regulation No." is an area in which the number of the ground law is defined, and is specifically defined as "Ordinance No. 38 on July 1, 1973". The "URL" is an area that defines URL information of a website in which contents of the ground law are described. The "outline" is an area that defines an outline of this administrative service, and a text sentence "in order to enhance insurance measures of a child to reduce an economic burden on child-raising households, in a case where a child receives medical treatment at a medical institution using health insurance due to illness, injury, or the like, we subsidize a part of self-pay (20% or 30%) of insurance medical treatment." is defined.

In addition, in the "payment content", a "target person" to be paid, an "applicant", and "an item to be paid" are defined. Specifically, as conditions for the "target person" to be paid, it is defined that the target person has national health insurance, that the target person lives in Kawaguchi City, that the target person is within a target age, that all guardians of the target person have paid their taxes, and that an income of a main guardian who makes a living among the guardians of the target person is less than 6.3 million yen + the number of dependents × 380,000 yen. In addition, as a condition of the "applicant", it is defined that the applicant is a main guardian who makes a living. In addition, as a condition of an "application date range", it is defined that the application date range is within 15 days from the day after a person has become a target. In addition, in the "item to be paid", a certificate of a child (infant) medical expenses qualified recipient issued in a case where a person has become a payment target is defined.

In addition, the "notification application method" is an area for storing a description of a specific application method, and a text sentence "registration of qualification is required. If you want to make a new application due to birth or move-in, please register the qualification within 15 days from the day after a reason arises. Please make an application within 15 days from the day after a health insurance card has come to hand in a case where a baby was just born, such that the health insurance card has not been issued and the day after you has been in a state where you can make an application in a case where you cannot immediately make an application due to an unavoidable circumstance such as a childbirth at parents' home, or the like." is defined.

In addition, the "belongings" are an area for storing an explanatory sentence regarding thing required at the time of making an application, and three belongings of a "health insurance card (health insurance card on which a child's first name is written)", "To know a transfer account in the name of a qualified recipient (Note that the transfer account is an account to which medical expenses is payed when a payment occurs at a medical institution.)", and a "seal impression (seal impression other than a stamp type seal impression) are defined as necessary documents of the belongings.

As described above, the information processing device 1 holds a data structure that accurately defines items required in administrative service units as illustrated in Fig. 3 with respect to the definition information 2A and 2B regarding the administrative service, such that it becomes possible to compare the definition information of the corresponding administrative services in a case of comparing the administrative services with each other or modify a definition content of the definition information in a case where a change or the like occurs in the administrative service itself. Therefore, objective comparison between the administrative services or data management can be easily performed. In addition, the definition information 2A and 2B regarding the administrative service may be a data structure defined in local government units rather than the administrative service units, and in a case of such definition information, in a case where a new administrative service is started by another local government, it becomes possible to refer to the definition information of the administrative service in the local government that has been already provided, and it thus becomes possible to reduce an increase a cost as compared with a case where systems are constructed and operated individually for each local government. In addition, even in a case where independent items of the local government are required, it becomes possible to individually cope with such a case by separately defining the independent items in the definition information of the administrative service. It should be noted that the definition information 2A and 2B regarding the administrative service illustrated in Fig. 3 is merely an example, and may be a data structure having a part of these definition information.

### (Example of definition information 2A and 2B of target person)

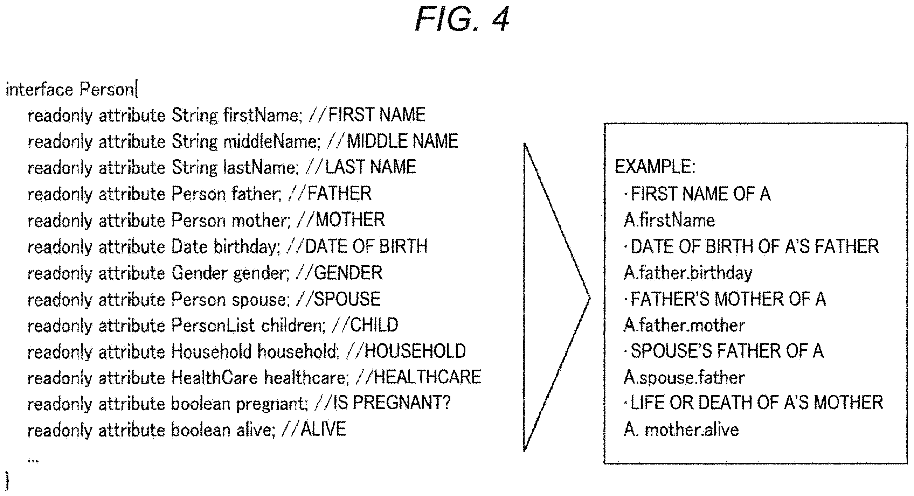

Fig. 4 is a diagram illustrating an example of definition information 2A and 2B expressing a target person, input to the information processing device 1 according to the embodiment of the present invention. As illustrated in Fig. 4, as attribute information of a target person, a "first name", a "middle name", a "last name", a "father", a "mother", a "date of birth", a "gender", a "spouse", a "child", a "household", "health insurance", "is pregnant?", and "alive" are defined. The "first name" is an area in which a first name of the target person is stored. The "middle name" is an area in which a middle name is stored in a case where the target person has the middle name. The "last name" is an area in which a last name of the target person is stored. The "father" and the "mother" are areas in which information that can identify a father or a mother of the target person (for example, identification information such as a first name, my number, or the like) is stored. The "date of birth" is an area in which information (numerical information of the Japanese or Western calendar) regarding the date of birth of the target person is stored. The "gender" is an area in which information regarding a biological gender or a social gender of the target person is stored. The "spouse" is an area in which information that can identify a spouse of the target person (for example, identification information such as a first name of the spouse, my number of the spouse, or the like) is stored. The "child" is an area in which information that can identify a child of the target person (for example, identification information such as a first name of the child, my number of the child, or the like) is stored. The "household" is an area in which information regarding a household of the target person (family structure) is stored. The "health insurance" is an area in which information regarding health insurance of the target person is stored. The "is pregnant?" is an area in which information regarding whether or not the target person is pregnant is stored. The "alive" is an area in which life or death of the target person is stored. It should be noted that the definition information 2A and 2B expressing the target person illustrated in Fig. 4 is merely an example, and may be a data structure having a part of these definition information.

As described above, the information processing device 1 has a data structure that can accurately define attribute information necessary for deciding whether or not the administrative service is applicable, as illustrated in Fig. 4, with respect to the attribute information regarding the target person. Therefore, since processing such as input of the information of the target person according to this definition, determination for whether or not the administrative service is applicable, record of other information regarding the target person, and the like, can be performed, it becomes easy to perform comparison with the definition information of the administrative service illustrated in Fig. 3 and it is possible to prevent omission of necessary information.

### (Operation example of information processing device 1)

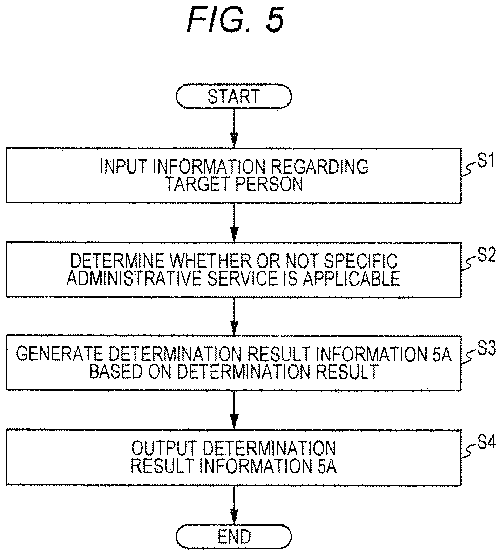

Fig. 5 is an example of a flowchart illustrating processing executed by the information processing device 1 according to the embodiment of the present invention. It should be noted that the following processing is started in a case where the information processing device 1 is turned on or input processing to the information processing device 1 has become possible (START).

Step S1: The input unit 3 of the information processing device 1 inputs the information regarding the target person to the determination unit 4. It should be noted that the information regarding the target person input to the input unit 3 may be directly input by an operator through the input unit 36 of the information processing device 1, may be input by receiving information transmitted from an external terminal connected via a network, or may be input by receiving information output from another program. It should be noted that it is assumed that information similar to the definition information expressing the target person described in Fig. 4 is input as the information regarding the target person input in step S1.

Step S2: The determination unit 4 of the information processing device 1 determines whether or not the specific administrative service is applicable on the basis of the information regarding the target person input from the input unit 3 and the definition information 2A and 2B of the specific administrative service held in the definition unit 2. For example, it is possible to determine whether or not the target person input in step S1 can be a subsidization target of infant medical expenses (child medical expenses) as the administrative service of Kawaguchi City, Saitama Prefecture described in Fig. 3. The determination unit 4 supplies a determination result to the information generation unit 5.

Step S3: The information generation unit 5 of the information processing device 1 generates the determination result information 5A based on the determination result of the determination unit 4. It should be noted that in the determination result information 5A generated by the information generation unit 5, in a case where a numerical value such as an amount of money or the like needs to be displayed in whether or not the administrative service is applicable, calculation for calculating the amount of money for performing such display, or the like, is also performed.

Step S4: The output unit 6 of the information processing device 1 outputs the determination result information 5A based on the determination result for whether or not the administrative service is applicable, generated by the information generation unit 5. An output destination of the output unit 6 is, for example, the display unit 27 of the information processing device 1, a display included in an external terminal (for example, a mobile terminal such as a personal computer (PC), a smartphone, or the like) that communicates with the information processing device 1 through a network, or the like. It should be noted that in a case where the determination result information 5A output from the output unit 6 is further processed or is used for another processing, processing of suppling to a destinated processor or a destination for handling may be performed.

### (Second embodiment: Outline of information processing device 1A)

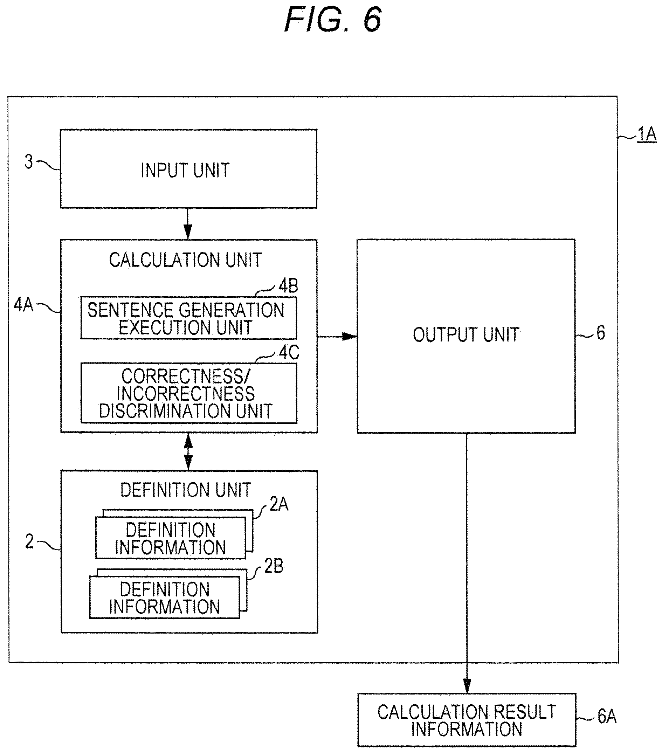

Fig. 6 is a diagram illustrating an outline of an information processing device 1A according to an embodiment of the present invention. The information processing device 1A can output, for example, information (for example, sentence information of a natural language such as Japanese, English, or the like, correct/incorrect information regarding an administrative service based on the sentence information, or the like) obtained by calculating an input administrative service by performing calculation on the basis of information regarding the input administrative service and definition information 2A and 2B defined in a definition unit 2. It should be noted that the same reference numerals are used for the same functions and hardware configurations as those of the information processing device 1 illustrated in Figs. 1 to 5, and a description of such configurations themselves will be omitted.

As illustrated in Fig. 6, the information processing device 1A includes a definition unit 2, an input unit 3, a calculation unit 4A, an information generation unit 5, and an output unit 6.

The calculation unit 4A executes calculation on the basis of information regarding an administrative service input from the input unit 3. The calculation unit 4A has a sentence generation execution unit 4B and a correctness/incorrectness discrimination execution unit 4C. The sentence generation execution unit 4B can execute, for example, generation of sentence information (explanation sentence of the administrative service) of a natural language such as Japanese, English, or the like, on the basis of the information regarding the administrative service input from the input unit 3. The correctness/incorrectness discrimination execution unit 4C performs correctness/incorrectness discrimination of the information regarding the administrative service input from the input unit 3. For example, when the information regarding the specific administrative service is input from the input unit 3, the correctness/incorrectness discrimination execution unit 4C executes the correctness/incorrectness discrimination by comparing the input information with the definition information 2A and 2B of the specific administrative service, defined in the definition unit 2. In addition, the correctness/incorrectness discrimination execution unit 4C executes the correctness/incorrectness discrimination by comparing the sentence information generated by the sentence generation execution unit 4B with the definition information 2A and 2B of the administrative service specified from the sentence information, defined in the definition unit 2.

The information generated by the calculation of the calculation unit 4A is output as calculation result information 6A through the output unit 6. It should be noted that in a case where information regarding a target person is input, in addition to the information regarding the administrative service, from the input unit 3, the calculation unit 4A may calculate whether or not the administrative service of the target person is applicable. In addition, in a case where the calculation result information 6A is further processed or is used for another processing on the basis of a calculation result of the calculation unit 4A, the calculation result information 6A may be first supplied to a destinated processor or a destination for handling.

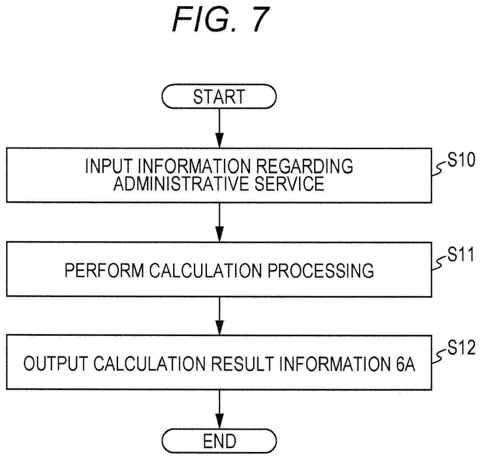

Fig. 7 is an example of a flowchart illustrating processing executed by the information processing device 1A according to the embodiment of the present invention. It should be noted that the following processing is started in a case where power of the information processing device 1 is turned on or input processing to the information processing device 1 has become possible (START).

Step S10: The input unit 3 of the information processing device 1A inputs the information regarding the administrative service to the calculation unit 4A as an argument. It should be noted that the information regarding the administrative service input to the input unit 3 may be directly input by an operator through the input unit 36 of the information processing device 1, may be input by receiving information transmitted from an external terminal connected through a network, or may be input by receiving information output from another program. It should be noted that it is assumed that information equivalent to the definition information expressing the administrative service described in Fig. 3 or the like is input as the information regarding the administrative service input in step S10.

Step S11: The calculation unit 4A of the information processing device 1 calculates whether or not the administrative service is applicable on the basis of the information regarding the administrative service input through the input unit 3 and the definition information 2A and 2B regarding the administrative service held in the definition unit 2 or calculates a desired value on the basis of a calculation equation related to the administrative service. The sentence generation execution unit 4B of the calculation unit 4A can execute, for example, the generation of the sentence information (explanation sentence of the administrative service) of the natural language such as Japanese, English, or the like, on the basis of the information regarding the administrative service input from the input unit 3. In addition, for example, when the information regarding the specific administrative service is input from the input unit 3, the correctness/incorrectness discrimination execution unit 4C of the calculation unit 4A executes the correctness/incorrectness discrimination (discrimination of, for example, whether or not there is no inconsistency in the definition information itself, whether or not the definition information itself is correctly set, or the like) by comparing the input information with the definition information 2A and 2B of the specific administrative service, defined in the definition unit 2. Alternatively, the correctness/incorrectness discrimination execution unit 4C of the calculation unit 4A executes the correctness/incorrectness discrimination (discrimination of, for example, whether or not there is no inconsistency in the sentence itself, whether or not the sentence is correctly created, or the like) by comparing the sentence information generated by the sentence generation execution unit 4B with the definition information 2A and 2B of the administrative service specified from the sentence information, defined in the definition unit 2. The calculation unit 4A supplies the calculation result information 6A calculated on the basis of the processing described above to the output unit 6.

Step S12: The output unit 6 of the information processing device 1 outputs the calculation result of the calculation unit 4A. An output destination of the output unit 6 is, for example, the display unit 27 of the information processing device 1A, a display included in an external terminal (for example, a mobile terminal such as a PC, a smartphone, or the like) that communicates with the information processing device 1A through a network, or the like. It should be noted that in a case where the determination result information 5A output from the output unit 6 is further processed or is used for another processing, processing for supplying to a destinated processor or a destination for handling may be performed.

It should be noted that the configurations and the operations of the information processing devices 1 and 1A described above have been described in relation to the administrative service as an example, but in relation to all services (for example, a welfare service, a childcare service, a food service, and the like, provided by a private company) other than the administrative service, similarly, it is possible to hold definition information based on characteristics of the service, input attribute information of a user of the service, determine whether or not the service is applicable, generate determination result information, and output the determination result information.

### (Effect of each embodiment)

As can be seen from the above description, according to the information processing device 1 described in the first embodiment, the definition information 2A and 2B regarding the predetermined service is held, the information regarding the target person who intends to use the predetermined service is input as an argument from the input unit 3 to the definition unit 2 (step S1 of Fig. 5), it is determined whether or not the predetermined service is applicable on the basis of the input information regarding the target person and the definition information regarding the predetermined service held in the definition unit 2 (step S2 of Fig. 5), the determination result information 5A calculated on the basis of whether or not the predetermined service is applicable and the determination result is generated (step S3 of Fig. 5), and the generated determination result information is output (step S4 of Fig. 5), and it is thus possible to express the information regarding the predetermined service by objective and consistent data to appropriately process and manage the information regarding the predetermined service.

In addition, according to the information processing device 1A described in the second embodiment, the definition information 2A and 2B regarding the predetermined service is held, the information regarding the predetermined service is input as an argument of the definition information regarding the predetermined service held in the definition unit 2 (step S10 of Fig. 7), the calculation regarding whether or not the predetermined service is applicable is performed on the basis of the input information regarding the predetermined service and the definition information regarding the predetermined service held in the definition unit 2 or the predetermined value is calculated on the basis of the calculation equation related to the predetermined service (step S11 of Fig. 7), and the calculation result is output (step S12 of Fig. 7), and it is thus possible to express the information regarding the predetermined service by objective and consistent data to appropriately process and manage the information regarding the predetermined service.

In addition, the definition information 2A and 2B regarding the predetermined service in the information processing devices 1 and 1A described above is the definition information regarding the administrative service, and it is thus possible to express the information regarding the administrative service by objective and consistent data to appropriately process and manage the information regarding the administrative service.

In addition, the definition information 2A and 2B regarding the administrative service in the information processing devices 1 and 1A described above includes basic information including at least one of the administrative service name indicating the administrative service, the ground law and regulation, and the implementation organization, and can thus be utilized as definition information that necessarily holds the basic information of the administrative service. Therefore, for example, search for the administrative service based on the basic information of the administrative service, comparison between the administrative services, verification of the administrative service itself, or management and operation of a system that realizes these processing can be efficiently performed.

Further, the definition information 2A and 2B regarding the administrative service in the information processing devices 1 and 1A described above includes the action information generated by the administrative service, and can thus be utilized as definition information that necessarily holds information such as what kind of event occurs specifically in a case of using the administrative service or in a case where the administrative service has been applied. Therefore, for example, search for the administrative service based on information that the user wants to receive as the administrative service, comparison between the administrative services, verification of the administrative service itself, or management and operation of a system that realizes these processing can be efficiently performed.

Further, the definition information 2A and 2B regarding the administrative service in the information processing devices 1 and 1A described above includes person information or thing information that is a subject of the administrative service indicating the administrative service, and can thus be utilized as definition information that necessarily holds information such as what kind of subject or thing information needs to be subject or thing information specifically as a subject that uses administrative service. Therefore, for example, search for the administrative service based on the attribute information of the target person, comparison between the administrative services, verification of the administrative service itself, or management and operation of a system that realizes these processing can be efficiently performed.

In addition, the definition information 2A and 2B regarding the administrative service in the information processing devices 1 and 1A described above includes the period information regarding the administrative service, and can thus be utilized as definition information that necessarily holds information of specific time period of the administrative service occurrence. Therefore, for example, search for the administrative service that can be used from a current situation of the target person, comparison between the administrative services, verification of the administrative service itself, or management and operation of a system that realizes these processing can be efficiently performed.

In addition, the definition information 2A and 2B regarding the administrative service in the information processing devices 1 and 1A described above includes the information regarding the notification, the application, or the feedback for generating the action of the administrative service, and can thus be utilized as definition information that necessarily holds information such as what the user must do specifically as the notification or the application for generating the action of the administrative services or fact information indicating that the notification has been accepted as the feedback, determination information based on an application result, and the like. Therefore, for example, search for the administrative service based on notification, application, or feedback that the target person is scheduled to perform in the future, comparison between the administrative services, verification of the administrative service itself, or management and operation of a system that realizes these processing can be efficiently performed.

In addition, since the definition information 2A and 2B regarding the administrative service in the information processing devices 1 and 1A described above is defined in local government units or administrative service units, the definition information can be utilized in local government units or administrative service units. Therefore, for example, it becomes possible to efficiently construct a system that provides information regarding an administrative service in an own local government with reference to an administrative service implemented by another local government.

It should be noted that an operation (information processing method) of the information processing device 1, a program for function as the information processing device 1, and a data structure of the information processing device 1 can also achieve the same effects as those described above.

### (Other effect 1: simplification of data structure by schemaless)

In addition to the effects described above, the information processing device 1 and 1A can achieve the following effects as compared with a conventional system that provides information regarding an administrative service. In a case of the conventional system that provide the information regarding the administrative service, it is common to design a data structure in a tabular format (table), and it is necessary to determine an item or a structure (schema definition) of the information regarding the administrative service in advance. However, in a case where independent items or structures have been required for each local government or for each administrative service, it is necessary to adopt a complicated structure for comprehensively expressing information regarding an existing administrative service or design a meaningless structure based on a future prediction in advance, which causes an increase in a cost.

In addition, in a case of designing the data structure in the tabular format, information regarding administrative services is related to each other, for example, an amount of money to be paid is changed for each target age. Therefore, it is also necessary to express (normalize) relevance between the information. However, since the information regarding the administrative services has features (1) there is no inclusion relationship between the information, (2) each information is individually related, (3) a manner of relation between the information is different for each administrative service, and the like, it becomes necessary to provide a large number of detailed items for each administrative service, such that the number of tables is apt to increase. Further, when the number of tables increases, it is also necessary to determine a standard of normalization to maintain consistency, but the presence or absence itself of data also differs depending on the local government, and the number of values used only by a specific administrative service of a specific local government also increases, and under such a situation, it is difficult to determine the standard of the normalization, and there is a risk that the possibility of inconvenience such as a bug or the like will increase even though the normalization has been performed.

On the other hand, the information processing devices 1 and 1A according to the present embodiment do not adopt the design of the data structure in the tabular format. Therefore, the schema definition that predicts the future in advance or the normalization for defining the relevance between information described above is not required, such that the inconvenience described above can be avoided. In addition, even in a case where the independent items or structures have been required for each local government or for each administrative service, it is possible to suppress a cost only by applying the independent items or structures to the definition information for each local government or for each administrative service.

### (Other effect 2: divisional arrangement of data is easy)

In addition, in the information processing devices 1 and 1A according to the present embodiment, it is also easy to implement sharding in which the definition information 2A and 2B itself is divisionally arranged in a plurality of servers. Therefore, not only the convenience improvement of the data, but also performance such as a response speed or the like, the information processing devices 1 and 1A is superior to that of a conventional system that provides information regarding an administrative service.

### (Other effect 3: application to analysis of administrative service is easy)

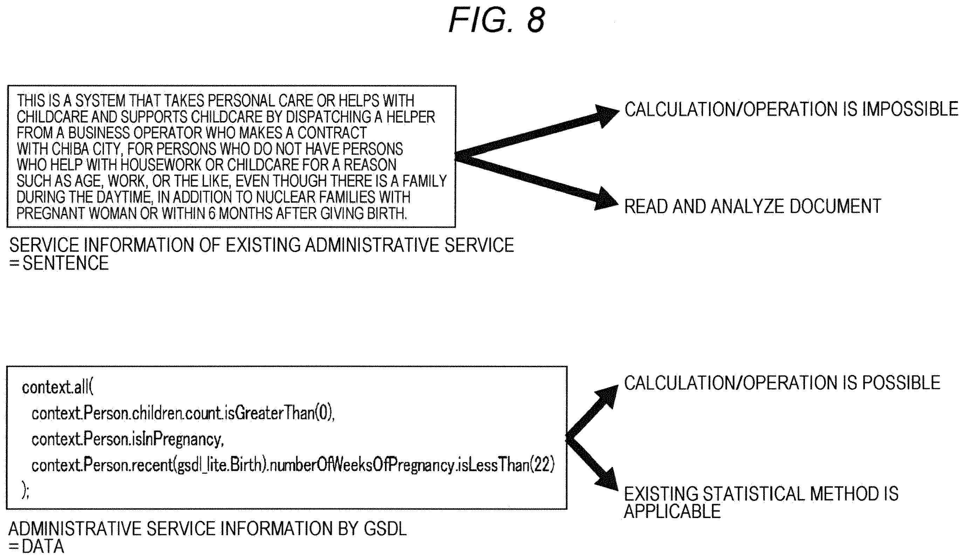

In addition, the information processing devices 1 and 1A described in each of the embodiments described above are a very preferable configuration also in a case of performing analysis (verification of validity or the like) of the administrative service. Fig. 8 is a diagram for describing a merit of the information processing devices 1 and 1A in a case of analyzing information regarding an administrative service. Conventionally, with respect to policy making, a technology for realizing evidence-based policy making (so-called EBPM) has been required. However, the administrative service is made particularly in consideration of persons in various situations, such that contents themselves of the administrative service are becoming more complicated year by year. In addition, since the administrative service itself is described in a sentence based on the law, in order to analyze the administrative service that is becoming complicated, it is necessary to read and analyze sentence information regarding the administrative service, which is very difficult. However, according to the configuration of the information processing device 1 and 1A of the present embodiment, it is possible to handle the administrative service as a data type that can be processed by numerical operation or logical operation. The meaning that the administrative service can be processed by the numerical operation and the logical operation is that the administrative service can be analyzed using an existing statistical method. If it becomes possible to analyze the information regarding the administrative service using various statistical methods, it becomes possible for national and local governments to analyze an existing administrative service in releasing a new policy and administrative service to design the new policy and administrative service so as to be a really necessary administrative service. In addition, if a relationship between the administrative services is analyzed, it is possible to prove that a planned administrative service is really applied to a desired target person. Alternatively, by detecting a contradiction between the administrative services, or the like, it is possible to reduce excessive costs for the administrative services and prevent occurrence of persons who are not sufficiently applied the administrative services, or the like.

### (Modification 1: editor)

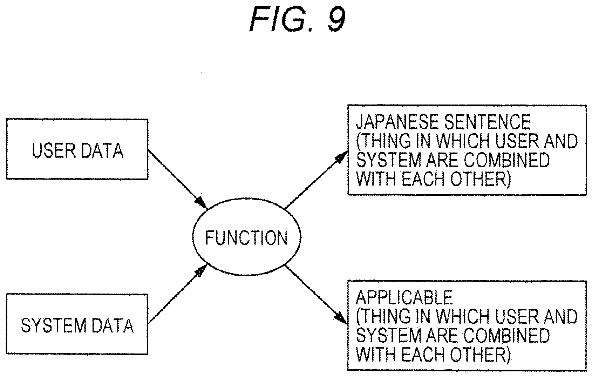

The embodiments of the present invention have been described hereinabove, but the present invention is not limited to the embodiments described above, and various modifications can be made without departing from the scope of the present technology. For example, in the information processing devices 1 and 1A, an example in which the information regarding the administrative service is output when the information regarding the target person or the information regarding the administrative service is input has been described, the information processing devices 1 and 1A may be configured to output information regarding an input target person and administrative service, for example, as in an image illustrated in Fig. 9 described later, when both of information regarding a target person and information regarding an administrative service are input.

Fig. 9 is a diagram illustrating an image of a case where both of information regarding a target person and information regarding an administrative service are input as arguments to a function having the definition information 2A and 2B and outputs based on such inputs. As illustrated in Fig. 9, the information processing devices 1 and 1A may be configured to generate a Japanese sentence based on the input contents of the target person and the administrative service when both of the information regarding the target person and the information regarding the administrative service are input as the arguments to the function having the definition information 2A and 2B. Alternatively, similarly, the information processing devices 1 and 1A may be configured to combine the target person and the administrative service with each other to output information indicating whether or not the administrative service is applicable when both of the information regarding the target person and the information regarding the administrative service are input as the arguments to the function having the definition information 2A and 2B.

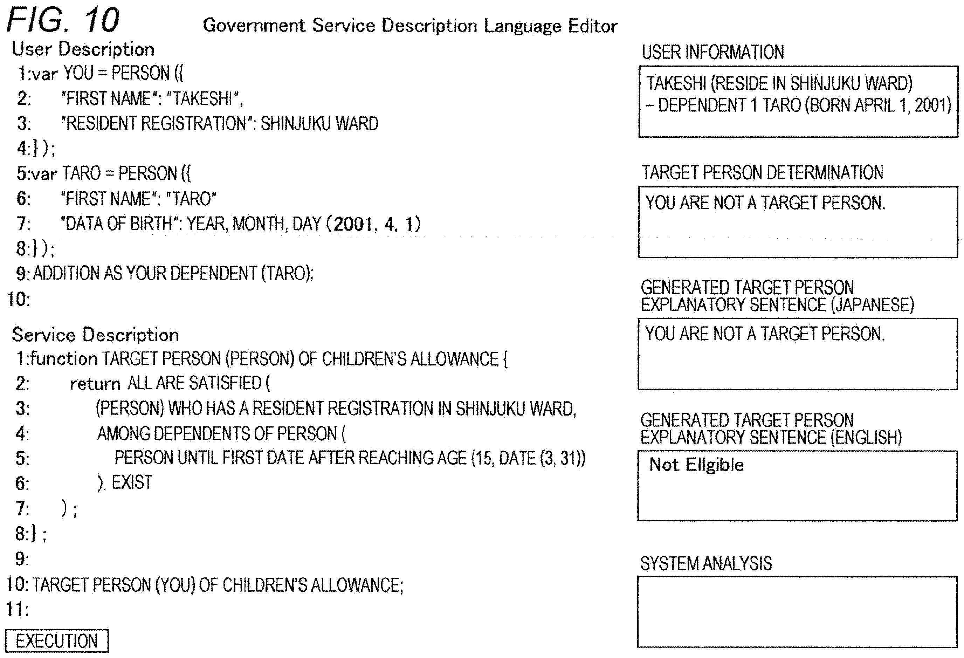

Fig. 10 is an example of a Web page realized by the information processing devices 1 and 1A according to the embodiment of the present invention. The Web page illustrated in Fig. 10 has an input field such as "User Description" and "Service Description" and an output field such as "User information", "Target Person Determination", "Generated Target Person Explanatory Sentence (Japanese)", "Generated Target Person Explanatory Sentence (English), and "System Analysis", and when both of attribute information of a user and detailed information of an administrative service are input in the input field and an execution button is pressed, it is possible to output an explanatory sentence regarding the user, whether or not the administrative service is applicable, and an explanation of the administrative service.

In "User Description" illustrated in Fig. 10, "Takeshi", which is a first name of the user himself/herself, that a place of residence is Shinjuku Ward, "Taro" as a dependent, and the date of birth (April 1, 2001) of the dependent are input. In addition, in "Service Description", it is defined as a determination criteria for a target person of a children's allowance that the dependent is a dependent of a person who has a resident registration in Shinjuku Ward and that the dependent is a person whose first day after reaching the age of 15 is before March 31 or on March 31.

In "User Information" illustrated in Fig. 10, "Takeshi (reside in Shinjuku Ward) - Dependent 1 Taro (born April 1, 2001)" is output on the basis of items input to the input field. In "Target Person Determination", "You are not a target person" is output because a condition of the date of birth of the dependent in a condition for the target person of the children's allowance is not satisfied. It should be noted that in the present embodiment, a text sentence having the same meaning as that of the output of "Target Person Determination" is also output in "Generated Target Person Explanatory Sentence (Japanese)", but it may be another expression. In addition, "Not Eligible" is output in "Generated Target Person Explanatory Sentence (English)". It should be noted that in "System Analysis", in a case where there is definition information of a children's allowance in another local government, a difference (for example, information regarding differences in a target condition, an amount of money of an allowance, and the like) from the definition information is output. It should be noted that in the input field illustrated in Fig. 9, a description has been made using a government service description language (GSDL) developed by an applicant so that the input can be performed in accordance with the items of the definition information held by the information processing device 1, but an input may not be necessarily input according to such a description method.

According to the Web page described above in Fig. 10, it can be utilized for objectively comparing administrative services of the respective local governments with each other, extracting a difference between administrative services of a plurality of local governments on the basis of the condition of the target person, or verifying an administrative service provided by another local government when a local government newly provides an administrative service.

### (Modification 2: setting common item and independent items of definition information)

In the information processing devices 1 and 1A described above, the definition information has been held and accumulated in local government units and in administrative service units, but when the definition information is defined in administrative service units, the definition information may be classified and defined into items common to each local government and independent items of each local government.

### (Other modification)

In addition, a series of processing of the information processing device 1 and 1A described above can be executed by hardware or can be executed by software. In a case where the series of processing of the information processing device 1 described above is executed by the software, a program that constitutes the software is installed from a program recording medium into a computer incorporated in dedicated hardware, a general-purpose personal computer capable of executing various functions by installing various programs, or the like, for example.

It should be noted that the program executed by the computer may be a program by which processing is performed in time series according to the order described in the present specification or may be a program by which processing is performed in parallel or at a necessary timing such as a timing when a call is made, or the like.

### (Third embodiment)

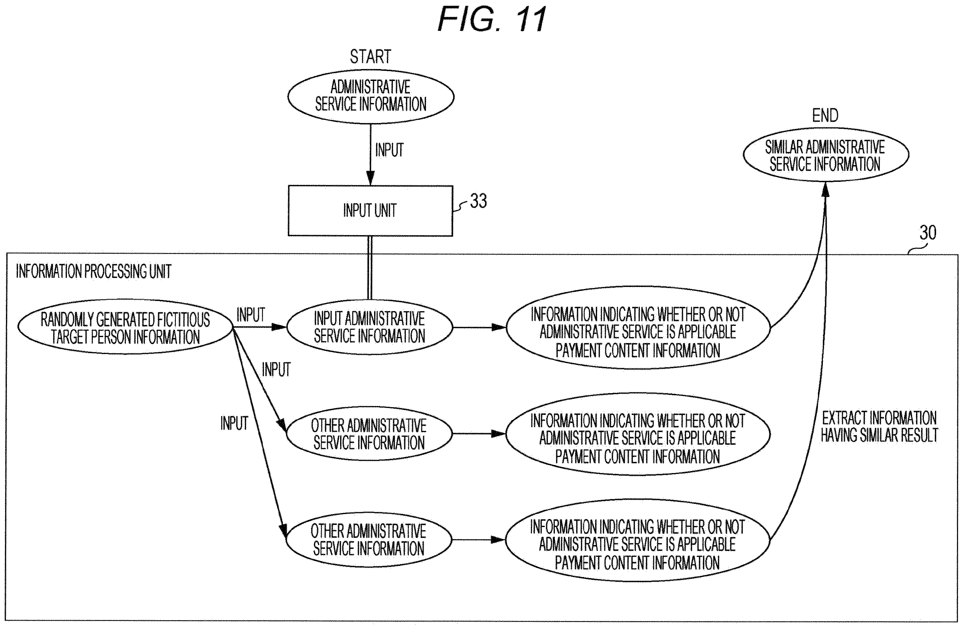

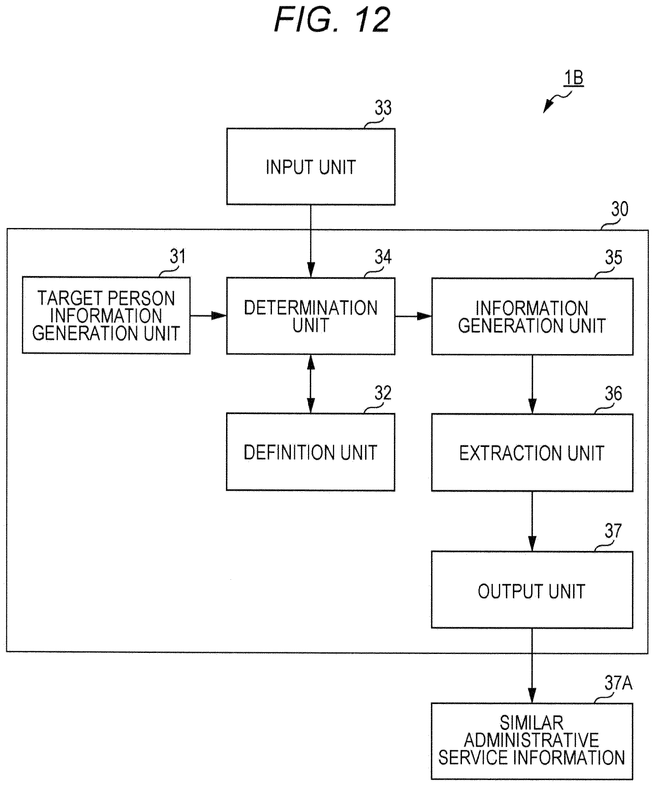

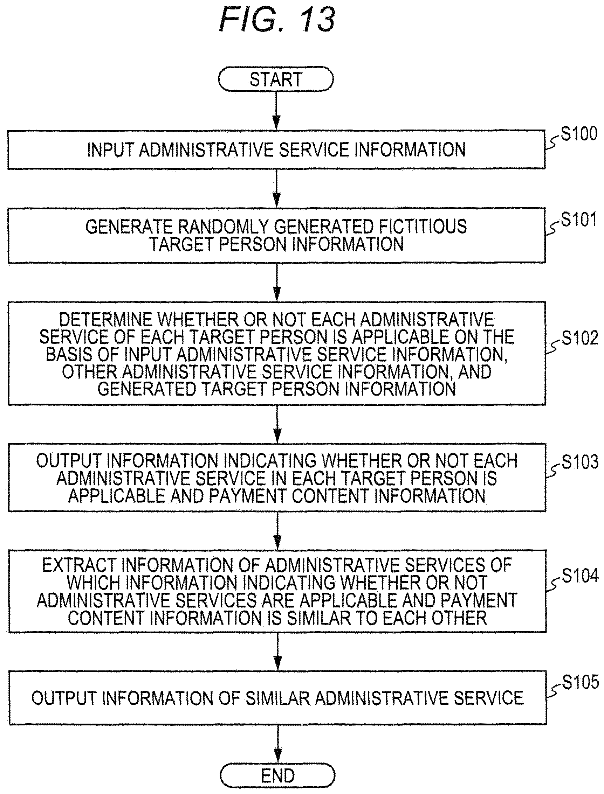

Fig. 11 is a diagram illustrating an outline of an information processing device 1B according to a third embodiment of the present invention. Fig. 12 is a diagram illustrating a hardware configuration example of the information processing device 1B according to the third embodiment of the present invention. Fig. 13 is a diagram illustrating an example of a flowchart illustrating processing executed by the information processing device 1B according to the third embodiment of the present invention. It should be noted that the following processing is started in a case where the information processing device 1B is turned on or input processing to the information processing device 1B has become possible. Here, an information processing unit 30 includes a definition unit 32, an input unit 33, a determination unit 34, a target person information generation unit 31, an information generation unit 35, an extraction unit 36, and an output unit 37.

The information processing device 1B determines whether or not an administrative service is applicable to a randomly generated fictitious target person described later and compares whether or not a plurality of administrative services are applicable as determined and payment contents of such services with each other to determine whether or not the plurality of administrative services are similar to each other on the basis of a predetermined similarity criterion, and outputs only administrative service information similar to each other as a result of the determination. The target person information described above is randomly generated fictitious user information, and is classified into plurality of user groups which are different each other according to attribute information regarding, for example, a "first name", a "middle name", a "last name", a "father", a "mother", a "date of birth", a "gender", a "spouse", a "child", a "household", a "healthcare", "is pregnant", and "alive" and stored in the definition unit 32 in advance.

The input unit 33 inputs information regarding an administrative service to be used (administrative service information) to the definition unit 32 as an argument. When the administrative service information is input to the input unit 33 (step S100 in Fig. 13), the target person information generation unit 31 randomly selects and generates a target person among target persons stored (defined) in the definition unit 32 (step S101). It should be noted that the randomly generated target person may not be the target person stored in the definition unit 32, and may be a newly generated target person having a predetermined attribute.

The determination unit 34 determines at least whether or not the administrative service is applicable and a service payment content on the basis of the information regarding the administrative service input through the input unit 33, information regarding an existing administrative service stored in the definition unit 32 (administrative service information other than the input administrative service information), and the randomly generated target person information (step S102), and outputs a determination result. Specifically, it is determined whether or not the administrative service obtained by inputting the information (for example, attribute information and the like) regarding the fictitious target person input from the target person information generation unit 31 to the input administrative service information output from the input unit 33 and other administrative service information stored (defined) in the definition unit 32 as arguments is applicable. Of course, the target person may input his/her target person information through the input unit 33, and the input target person information may be used instead of the randomly generated target person information. The information generation unit 35 generates and outputs information indicating whether or not the administrative service is applicable based on the determination result of the determination unit 34 or information indicating the service payment content (step S103).

The extraction unit 36 compares the information indicating whether or not the plurality of administrative services are applicable and the information indicating the service payment contents output from the information generation unit 35 with each other to determine similarity between information indicating whether or not the input administrative service and an existing administrative service are applicable and/or service payment contents (for example, classify the service payment contents into each of a plurality of items, give scores to each of the classified items, and calculate a similarity on the basis of the scores to determine whether or not the similarity exceeds a predetermined similarity (a similarity is high, a similarity is low, or the like)). As a result of the determination, all of information (similar administrative service information) 37A regarding administrative services having a high similarity (a similarity equal to or higher than a predetermined threshold value) is extracted (step S104), and such information is output to the output unit 37 (step S105).

Similar to the first embodiment described above, an output destination of the output unit 37 is, for example, a display unit (not illustrated) of the information processing device 1B, a display included in an external terminal (for example, a mobile terminal such as a PC, a smartphone, or the like) that communicates with the information processing device 1B through a network, or the like. It should be noted that in a case where the similar administrative service information 37A output from the output unit 37 is further processed or is used for another processing, processing for supplying to a destinated processor or a destination for handling may be performed.

### <Modification>

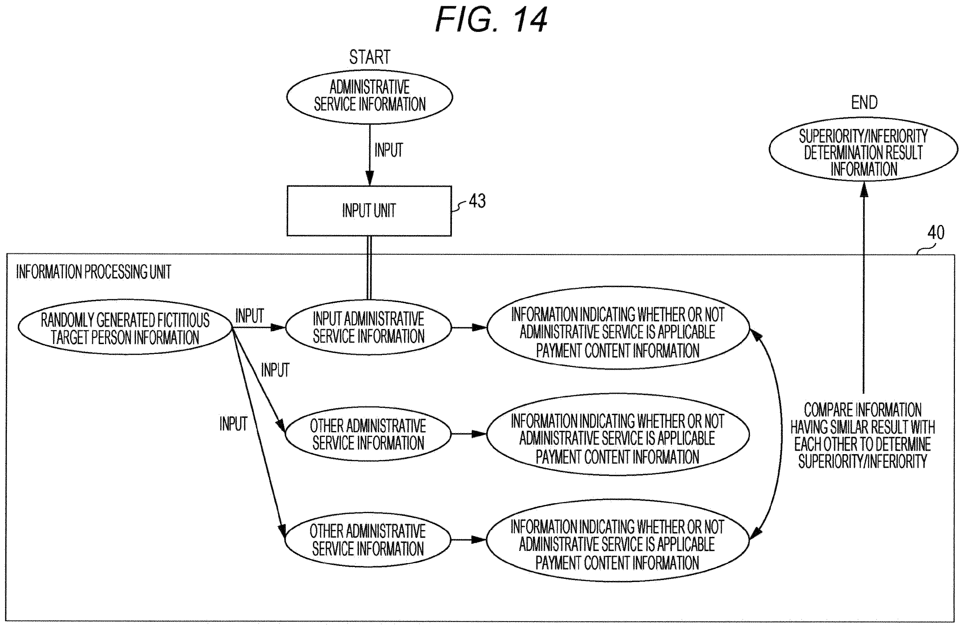

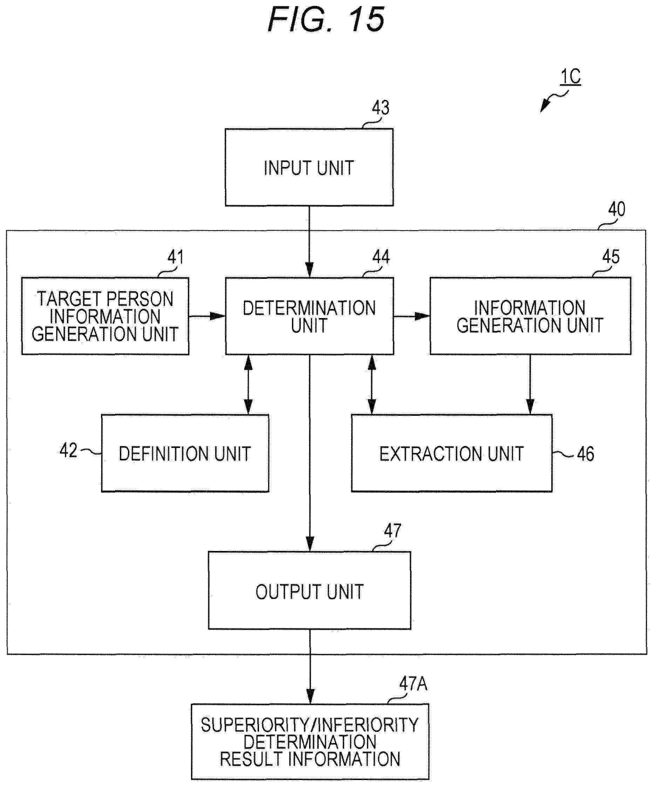

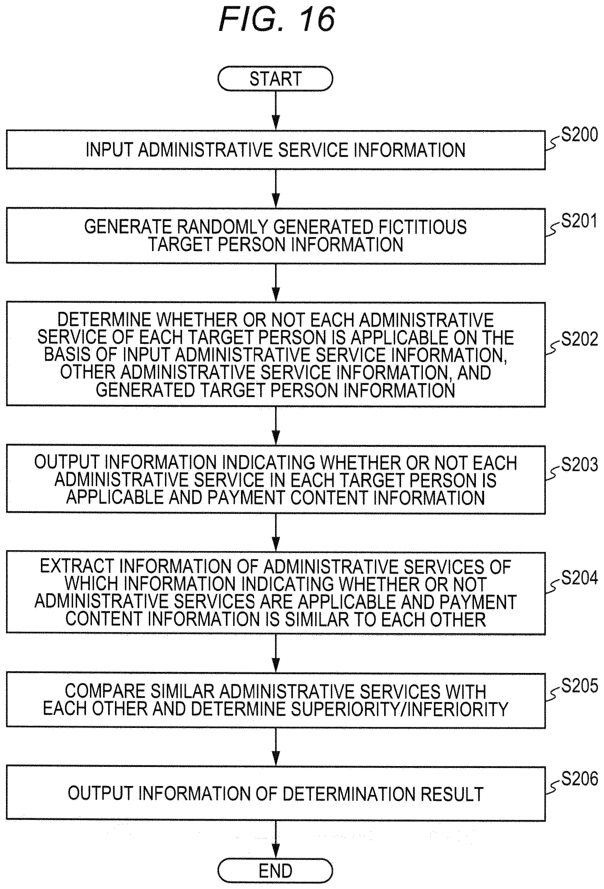

Fig. 14 is a diagram illustrating an outline of an information processing device 1C according to a modification of the third embodiment of the present invention. Fig. 15 is a diagram illustrating a hardware configuration example of the information processing device 1C according to a modification of the third embodiment of the present invention. Fig. 16 is a diagram illustrating an example of a flowchart illustrating processing executed by the information processing device 1C according to a modification of the third embodiment of the present invention. An information processing unit 40 includes a definition unit 42, an input unit 43, a determination unit 44, a target person information generation unit 41, an information generation unit 45, an extraction unit 46, and an output unit 47. The present modification is the same as the third embodiment described above except that processing of the determination unit 44 and the extraction unit 46 is different from that described above, and a description of parts similar to the third embodiment will thus be omitted.

The determination unit 44 determines (step S202)at least whether or not the administrative service is applicable and a service payment content on the basis of the information regarding the administrative service input (steps S200 of Fig. 16) through the input unit 43, information regarding an existing administrative service stored in the definition unit 42 (administrative service information other than above mentioned input administrative service information), and the randomly generated (step S201) fictitious target person information, and outputs a determination result (step S203). The information generation unit 45 generates and outputs information indicating whether or not the administrative service is applicable based on the determination result of the determination unit 44 or information indicating the service payment content (step S203).

The extraction unit 46 compares the information indicating whether or not the plurality of administrative services are applicable and the information indicating the service payment contents output from the information generation unit 45 with each other to determine similarity of information indicating whether or not the input administrative service and an existing administrative service are applicable and/or service payment contents (for example, classify the service payment contents into each of a plurality of items, give scores to each of the classified items, and calculate a similarity on the basis of the scores to determine whether or not the similarity exceeds a predetermined similarity (a similarity is high, a similarity is low, or the like)). As a result of the determination, all of information (similar administrative service information) regarding administrative services having a high similarity (the similarity is more than predetermined threshold value) is extracted (step S204), and such information is output to the determination unit 44.

The determination unit 44 compares the information regarding the administrative services having the similarity equal to or higher than the predetermined threshold value with each other, the information being output from the extraction unit 46, and determines superiority/inferiority of value evaluation of such services (step S205). Information of a superiority/inferiority determination result (priority/inferiority determination result information) 47A is output to the output unit 47 (step S206).

It should be noted that the configurations and the operations of the information processing devices 1, 1A, 1B, and 1C described above have been described in relation to the administrative service as an example, but similar to all services (for example, a welfare service, a childcare service, a food service, and the like, provided by a private company) other than the administrative service, it is possible to hold definition information based on characteristics of the service, input attribute information of a user of the service, determine whether or not the service is applicable, generate determination result information, and output the determination result information.

### (Effect of third embodiment)

As can be seen from the above description, according to the information processing device 1 described in the third embodiment, whether or not the plurality of administrative services to which specific target person information is input are applicable and service payment contents of the administrative service are compared with each other to determine a similarity between the administrative services, the information regarding the administrative services having a high degree of similarity is extracted, and all of such information is displayed on the display unit such as a display or the like. Therefore, in a case where an administrative service provider side reforms the administrative service, it is possible to quickly and appropriately improve or optimize the administrative service. Then, it is possible for a user himself/herself to quickly and accurately select the administrative service.

In addition, according to the information processing device 1 described in the modification, whether or not the plurality of administrative services to which specific target person information is input are applicable and service payment contents of the administrative service are compared with each other to determine a similarity between the administrative service, the information regarding the administrative services having a high degree of similarity is extracted, superiority/inferiority, and the like, of the plurality of administrative services having the high degree of similarity are determined, and a determination result is displayed on the display unit such as a display or the like. Therefore, it is possible for the administrative service provider side to use and analyze the superiority/inferiority determination result for improvement and the like of a target administrative service, it is possible to contribute to quick and accurate reform of the administrative service, and it is possible to contribute to quick and appropriate selection of the administrative service even though the target person is an individual.

### {Reference Signs List}

1, 1A, 1B, 1C: Information processing device
2: Definition unit
2A, 2B: Definition information
3, 33, 43: Input unit
4, 34, 44: Determination unit
4A: Calculation unit
4B: Sentence generation execution unit
4C: Correctness/incorrectness discrimination execution unit
5, 35, 45: Information generation unit
5A: Determination result information
6: Output unit
6A: Calculation result information
21: CPU
22: ROM
23: RAM
24: Bus
25: Input/output interface
26: Input unit
27: Display unit
28: Storage unit
29: Communication unit
30, 40: Information processing unit
31, 41: Target person information generation unit
36, 46: Extraction unit
37A: Similar administrative service information
47A: Superiority/inferiority determination result information

## Claims

1. An information processing device comprising:
a definition unit that holds definition information regarding a predetermined service;
an input unit that inputs information regarding a target person who intends to use the predetermined service as an argument of the definition information regarding the predetermined service held in the definition unit;
a determination unit that determines whether or not the predetermined service is applicable on the basis of the information regarding the target person input through the input unit and the definition information regarding the predetermined service held in the definition unit;
an information generation unit that generates determination result information calculated on the basis of whether or not the predetermined service is applicable and a determination result of the determination unit; and
an output unit that outputs the determination result information generated by the information generation unit.

2. An information processing device comprising:
a definition unit that holds definition information regarding a predetermined service;
an input unit that inputs information regarding the predetermined service as an argument of the definition information regarding the predetermined service held in the definition unit;
a calculation unit that performs calculation regarding whether or not the predetermined service is applicable or calculates a desired value according to a calculation equation related to the predetermined service on the basis of the information regarding the predetermined service input through the input unit and the definition information regarding the predetermined service held in the definition unit; and
an output unit that outputs a calculation result of the calculation unit.

3. An information processing device comprising:
a definition unit that holds definition information regarding a predetermined service;
an input unit that inputs information regarding the predetermined service that is to provide or use the predetermined service as an argument of the definition information regarding the predetermined service held in the definition unit;
a determination unit that determines whether or not a service obtained by inputting information of a target person generated randomly and having a predetermined attribute to each of the information regarding the predetermined service input through the input unit and the definition information regarding the predetermined service held in the definition unit is applicable;
an information generation unit that generates information indicating whether or not the service is applicable, as a determination result by the determination unit, and service content information;
an extraction unit that determines whether or not a plurality of the generated information indicating whether or not the service is applicable is similar and extracts only a similar service; and
an output unit that outputs the extracted similar service.

4. An information processing device comprising:
a definition unit that holds definition information regarding a predetermined service;
an input unit that inputs information regarding the predetermined service that is to provide or use the predetermined service as an argument of the definition information regarding the predetermined service held in the definition unit;
a determination unit that determines whether or not a service obtained by inputting information of a target person generated randomly and having a predetermined attribute to each of the information regarding the predetermined service input through the input unit and the definition information regarding the predetermined service held in the definition unit is applicable;
an information generation unit that generates information indicating whether or not the service is applicable, as a determination result by the determination unit, and service content information; and
an extraction unit that determines whether or not a plurality of the generated information indicating whether or not the service is applicable is similar and extracts only a similar service,
wherein
the determination unit comparatively analyses a plurality of similar services extracted by the extraction unit and determines superiority/inferiority of value evaluation of the services, and
information on the superiority/inferiority of the value evaluation of the service determined by the determination unit is output to an output unit.

5. The information processing device according to any one of claims 1 to 4, wherein
the definition information regarding the predetermined service is definition information regarding an administrative service.

6. The information processing device according to claim 5, wherein
the definition information regarding the administrative service includes basic information including at least one of an administrative service name, a ground law and regulation, and an implementation organization.

7. The information processing device according to claim 5 or 6, wherein
the definition information regarding the administrative service includes action information generated by the administrative service.

8. The information processing device according to claim 5 or 6, wherein
the definition information regarding the administrative service includes person information or thing information that is a subject of the administrative service.

9. The information processing device according to any one of claims 5 to 8, wherein
the definition information regarding the administrative service includes period information regarding the administrative service.

10. The information processing device according to any one of claims 5 to 9, wherein
the definition information regarding the administrative service includes at least one of information regarding notification, application, or feedback , the information is for an action of the administrative service to occur.

11. The information processing device according to any one of claims 5 to 10, wherein
the definition information regarding the administrative service is defined in local government units or in administrative service units.

12. An information processing method executed by an information processing device including a definition unit, an input unit, a determination unit, an information generation unit, and an output unit,
the definition unit holding definition information regarding a predetermined service, the information processing method comprising:
an input step in which the input unit inputs information regarding a target person who intends to use the predetermined service as an argument of the definition information regarding the predetermined service held in the definition unit;
a determination step in which the determination unit determines whether or not the predetermined service is applicable on the basis of the information regarding the target person input through the input step and the definition information regarding the predetermined service held in the definition unit;
an information generation step in which the information generation unit generates determination result information calculated on the basis of whether or not the predetermined service is applicable and a determination result in the determination step; and
an output step in which the output unit outputs the determination result information generated by the information generation step.

13. An information processing method executed by an information processing device including a definition unit, an input unit, a calculation unit, and an output unit,
the definition unit holding definition information regarding a predetermined service, the information processing method comprising:
an input step in which the input unit inputs information regarding the predetermined service as an argument of the definition information regarding the predetermined service held in the definition unit;
a calculation step in which the calculation unit calculates regarding whether or not the predetermined service is applicable or calculates a desired value according to a calculation equation related to the predetermined service on the basis of the information regarding the predetermined service input through the input unit and the definition information regarding the predetermined service held in the definition unit; and
an output step in which the output unit outputs a calculation result of the calculation unit.

14. An information processing method executed by an information processing device including a definition unit, an input unit, a determination unit, an information generation unit, an extraction unit, and an output unit,
the definition unit holding definition information regarding a predetermined service, the information processing method comprising:
an input step in which the input unit inputs information regarding the predetermined service that is to provide or use the predetermined service as an argument of the definition information regarding the predetermined service held in the definition unit;
a determination step in which the determination unit determines whether or not a service obtained by inputting information of a target person generated randomly and having a predetermined attribute to each of the information regarding the predetermined service and the definition information regarding the predetermined service held in the definition unit is applicable;
an information generation step in which the information generation unit generates information indicating whether or not the service is applicable, as a determination result by the determination unit, and service content information;
an extraction step in which the extraction unit determines whether or not a plurality of the generated information indicating whether or not the service is applicable is similar and extracts only a similar service; and
an output step of outputting the similar service extracted by the extraction step.

15. An information processing method executed by an information processing device including a definition unit, an input unit, a determination unit, an information generation unit, an extraction unit, and an output unit,
the definition unit holding definition information regarding a predetermined service, the information processing method comprising:
an input step in which the input unit inputs information regarding the predetermined service that is to provide or use the predetermined service as an argument of the definition information regarding the predetermined service held in the definition unit;
a first determination step in which the determination unit determines whether or not a service obtained by inputting information of a target person generated randomly and having a predetermined attribute to each of the information regarding the predetermined service and the definition information regarding the predetermined service held in the definition unit is applicable;
an information generation step in which the information generation unit generates information indicating whether or not the service is applicable, as a determination result by the determination unit, and service content information;
an extraction step in which the extraction unit determines whether or not a plurality of the generated information indicating whether or not the service is applicable is similar and extracts only a similar service;
a second determination step in which the determination unit comparatively analyses a plurality of similar services extracted by the extraction unit and determines superiority/inferiority of value evaluation of the services; and
an output step in which the output unit outputs information on the superiority/inferiority of the value evaluation of the service determined by the determination unit.

16. A program for causing a computer to function as an information processing device including a definition unit, an input unit, an information generation unit, and an output unit,
the program causing the computer to function as:
the input unit that inputs information regarding a target person who intends to use the predetermined service as an argument of definition information regarding the predetermined service held in the definition unit;
a determination unit that determines whether or not the predetermined service is applicable on the basis of the information regarding the target person input through the input unit and the definition information regarding the predetermined service held in the definition unit;
the information generation unit that generates determination result information calculated on the basis of whether or not the predetermined service is applicable and a determination result of the determination unit; and
the output unit that outputs the determination result information generated by the information generation unit.

17. A program for causing a computer to function as an information processing device including a definition unit, an input unit, a calculation unit, and an output unit,
the program causing the computer to function as:
the input unit that inputs information regarding the predetermined service as an argument of definition information regarding the predetermined service held in the definition unit;
the calculation unit that performs calculation regarding whether or not the predetermined service is applicable or calculates a desired value according to a calculation equation related to the predetermined service on the basis of the information regarding the predetermined service input through the input unit and the definition information regarding the predetermined service held in the definition unit; and
the output unit that outputs a calculation result of the calculation unit.

18. A program for causing a computer to function as an information processing device including a definition unit, an input unit, a determination unit, an information generation unit, an extraction unit, and an output unit,
the program causing the computer to function as:
the input unit that inputs information regarding a predetermined service that is to provide or use the predetermined service as an argument of definition information regarding the predetermined service held in the definition unit;
the determination unit that determines whether or not a service obtained by inputting information of a target person generated randomly and having a predetermined attribute to each of the information regarding the predetermined service input through the input unit and the definition information regarding the predetermined service held in the definition unit is applicable;
the information generation unit that generates information indicating whether or not the service is applicable, as a determination result by the determination unit, and service content information;
the extraction unit that determines whether or not a plurality of the generated information indicating whether or not the service is applicable is similar and extracts only a similar service; and
the output unit that outputs the extracted similar service.

19. A program for causing a computer to function as an information processing device including a definition unit, an input unit, a determination unit, an information generation unit, an extraction unit, and an output unit,
the program causing the computer to function as:
the input unit that inputs information regarding the predetermined service that is to provide or use the predetermined service as an argument of definition information regarding the predetermined service held in the definition unit;
the determination unit that determines whether or not a service obtained by inputting information of a target person generated randomly and having a predetermined attribute to each of the information regarding the predetermined service input through the input unit and the definition information regarding the predetermined service held in the definition unit is applicable;
the information generation unit that generates information indicating whether or not the service is applicable, as a determination result by the determination unit, and service content information; and
the extraction unit that determines whether or not a plurality of the generated information indicating whether or not the service is applicable is similar and extracts only a similar service,
causing the determination unit to perform a function of comparative analysis of a plurality of similar services extracted by the extraction unit and determining superiority/inferiority of value evaluation of the service, and
causing the output unit to perform a function of outputting information on the superiority/inferiority of the value evaluation of the service determined by the determination unit.

20. A data structure used in a system for providing an administrative service,
the data structure
being for defining information regarding the administrative service, and
being for storing:
basic information including at least one of the administrative service name, a ground law and regulation, and an implementation organization,
action information generated by the administrative service,
person information or thing information that is a subject of the administrative service,
period information regarding the administrative service, and
information regarding notification, application, or feedback for an action of the administrative service to occur, wherein
whether or not the information regarding the administrative service is applicable is determined on the basis of the information regarding the administrative service defined by the information stored in the data structure and information regarding a target person who intends to use the administrative service, determination result information calculated on the basis of whether or not the information regarding the administrative service is applicable and a determination result is generated, and the generated determination result information is output.

21. A data structure used in a system for providing an administrative service,
the data structure
being for defining information regarding the administrative service, and
being for storing:
basic information including at least one of an administrative service name indicating the administrative service, a ground law and regulation, and an implementation organization,
action information generated by the administrative service,
person information or thing information that is a subject of the administrative service,
period information regarding the administrative service, and
information regarding notification, application, or feedback for an action of the administrative service to occur, wherein
when the information regarding the administrative service is input as an argument of definition information regarding the administrative service stored in the data structure, whether or not the administrative service is applicable is calculated or a desired value is calculated on the basis of a calculation equation related to the administrative service, and a calculation result is output.
